Europäisches Patentamt

European Patent Office

Office européen des brevets

(19)

(11) Veröffentlichungsnummer : **0 133 615**
**B1**

(12) **EUROPÄISCHE PATENTSCHRIFT**

(45) Veröffentlichungstag der Patentschrift :
30.09.87

(21) Anmeldenummer : 84890122.9

(22) Anmeldetag : 29.06.84

(51) Int. Cl.⁴ : **F 16 K   5/08**

(54) **Absperrorgan, insbesondere für eine Hochdruckleitung.**

(30) Priorität : 05.07.83 AT 2452/83

(43) Veröffentlichungstag der Anmeldung :
27.02.85 Patentblatt 85/09

(45) Bekanntmachung des Hinweises auf die Patenterteilung : 30.09.87 Patentblatt 87/40

(84) Benannte Vertragsstaaten :
**CH DE FR GB IT LI SE**

(56) Entgegenhaltungen :
DE-A- 1 600 754
US-A- 2 934 312

(73) Patentinhaber : **VOEST-ALPINE Aktiengesellschaft**
**Muldenstrasse 5**
**A-4020 Linz (AT)**

(72) Erfinder : **Winkler, Stefan, Dipl.-Ing.**
**Heindlstrasse 25**
**A-4040 Linz (AT)**
Erfinder : **Hametner, Rudolf, Dipl.-Ing.**
**Pfarrfeld 12/30**
**A-4210 Gallneukirchen (AT)**

(74) Vertreter : **Hübscher, Gerhard, Dipl.-Ing. et al**
**Patentanwälte Dipl.-Ing. Gerhard Hübscher Dipl.-Ing.**
**Helmut Hübscher Dipl.-Ing. Helner Hübscher Spit-**
**telwiese 7**
**A-4020 Linz (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Absperrorgan, insbesondere für eine Hochdruckleitung, bestehend aus einem Gehäuse und einem drehbar gelagerten Verschlußstück, das mit zwei die geometrische Drehachse bestimmenden Lageransätzen in zwei stirnseitig durch je einen Lagerdeckel verschlossene Gehäuselager eingreift.

Bei Absperrorganen dieser Art wird das Gehäuse im Bereich der Gehäuselager nicht dem Druck des Druckmittels ausgesetzt, weil die in die Gehäuselager eingreifenden Lagerungsansätze des Verschlußstückes eine Gehäusebeaufschlagung in diesem Bereich verhindern. Dies hat zur Folge, daß der Gehäuseinnendruck nicht gleichmäßig über das Gehäuse abgetragen werden kann. Die dadurch bedingte ungleichmäßige Spannungsverteilung führt einerseits zu einer höheren Belastung bestimmter Gehäuseteile und anderseits zu einer Biegebelastung, die eine zusätzliche Gehäusebelastung darstellt und im Zusammenhang mit den übrigen Gehäusebeanspruchungen ein Unrundwerden des üblicherweise durch eine Zylinderschale gebildeten Gehäuses bewirkt, was ein Undichtwerden des Absperrorganes zur Folge hat.

Um bei einem Klappenventil mit einer gegenüber der Durchflußrichtung geneigten Antriebswelle für die Klappe die Dichtungen vor einer ungleichmäßigen Belastung zu bewahren, die sich aus einer in Richtung der Antriebswelle für die Klappe auftretenden Komponente der Klappenbelastung durch das Druckmittel herleitet, ist es bekannt (US-A-2 934 312), die eine Stirnseite der Antriebswelle für die Klappe über einen Kolben mit einer entsprechenden Gegenkraft zu beaufschlagen. Zu diesem Zweck ist zwischen dem sich an der Antriebswelle abstützenden Kolben und einem Deckel eines den Kolben aufnehmenden Gehäusestutzens ein Druckraum vorgesehen, der über eine äußere Verbindungsleitung mit dem druckbeaufschlagten Gehäuseinneren in Verbindung steht. Diese bekannte Konstruktion kann zwar die auf die geneigte Antriebswelle wirkenden Axialkräfte ausgleichen, nicht aber die ungleichmäßige Belastung des Ventilgehäuses, so daß bei einem Einsatz in Hochdruckleitungen mit den gleichen Schwierigkeiten hinsichtlich der Dichtungsprobleme zu rechnen ist.

Der Erfindung liegt somit die Aufgabe zugrunde, diese Mängel zu vermeiden und ein Absperrorgan der eingangs geschilderten Art so zu verbessern, daß mit einfachen Mitteln eine gleichmäßige Belastung des Gehäuses sichergestellt und eine die Dichtung beeinträchtigende Verformung des Gehäuses zufolge örtlicher Überlastungen ausgeschlossen wird.

Die Erfindung löst die gestellte Aufgabe dadurch, daß auf beiden Seiten des Verschlußstückes zwischen der Stirnfläche des Lagerungsansatzes bzw. einem dem Lagerungsansatz zugeordneten Kolben einerseits und dem Lagerdeckel anderseits ein mit dem Gehäuseinneren in Druckverbindung stehender Druckraum vorgesehen ist.

Das Vorsehen eines Druckraumes auf beiden Seiten des Verschlußstückes bewirkt, daß die Lagerdeckel mit dem Gehäuseinnendruck beaufschlagt werden, so daß über diese Lagerdeckel das Gehäuse über den gesamten Umfang im wesentlichen gleichmäßig belastet wird, was einerseits örtliche Überlastungen vermeidet und anderseits eine unerwünschte Verformung ausschließt. Die gleichzeitig auftretenden gegensinnigen Belastungen der Lagerungsansätze des Verschlußstückes heben sich nach außen hin auf, so daß keine einseitigen axialen Kräfte auf das Verschlußstück wirksam werden können.

Besonders einfache Konstruktionsverhältnisse ergeben sich, wenn in weiterer Ausbildung der Erfindung die Lagerungsansätze zur Druckverbindung der Druckräume mit dem Gehäuseinneren eine axiale Durchtrittsbohrung aufweisen. Diese Durchtrittsbohrungen können daher keine Schwächungen des Gehäuses bilden, was für den Einsatz solcher Absperrorgane für hohe Drücke von Bedeutung ist. Außerdem wird durch eine solche Konstruktion dem Umstand Rechnung getragen, daß beispielsweise bei Kugelschiebern im Regelfall die stromabwärtsgelegene von zwei vorgesehenen Dichtungen zur Wirkung kommt, während die stromaufwärtsgelegene Dichtung nur für Reparaturarbeiten benützt wird, so daß in den Druckräumen der jeweils das Gehäuse belastende Druck ansteht.

Um eine gleichmäßige Kräfteübertragung zwischen den Lagerdeckeln und dem Gehäuse sicherzustellen, kann das Gehäuse zur Bildung der Druckräume mit Lagerstutzen versehen werden, die stirnseitig von den Lagerdeckeln übergriffen sind. Damit ergibt sich eine formschlüssige Verbindung, die das Mittragen der Gehäusebelastung durch die Lagerdeckel unterstützt.

In der Zeichnung ist der Erfindungsgegenstand in einem Ausführungsbeispiel dargestellt. Es zeigen :

Figur 1 ein erfindungsgemäßes Absperrorgan in einem Querschnitt und

Figur 2 dieses Absperrorgan in einem Schnitt nach der Linie II-II der Fig. 1, wobei das Verschlußstück in der linken Darstellungshälfte in geöffnetem und in der rechten Darstellungshälfte in geschlossenem Zustand gezeigt ist.

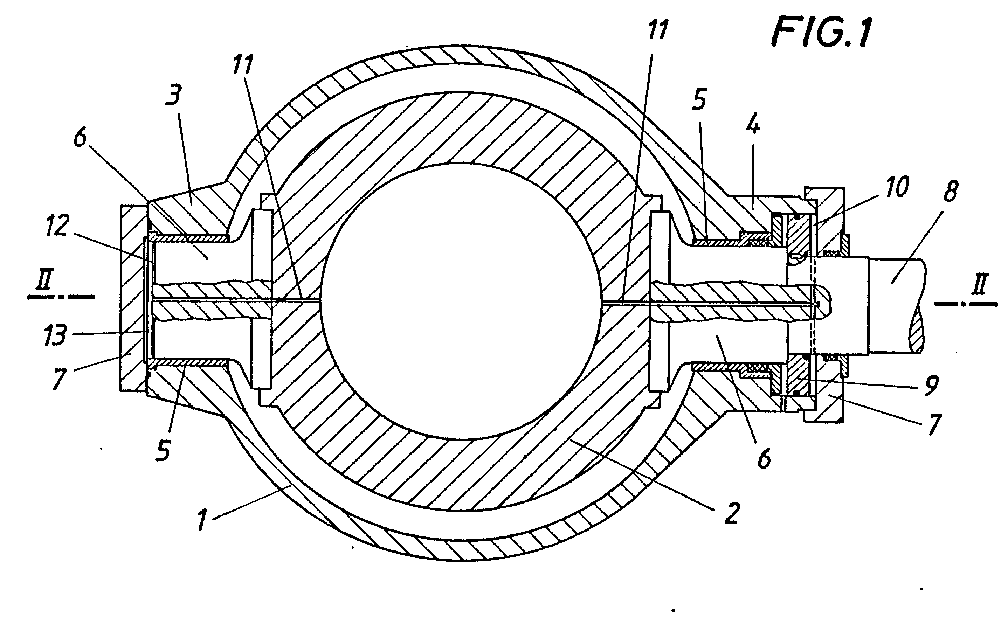

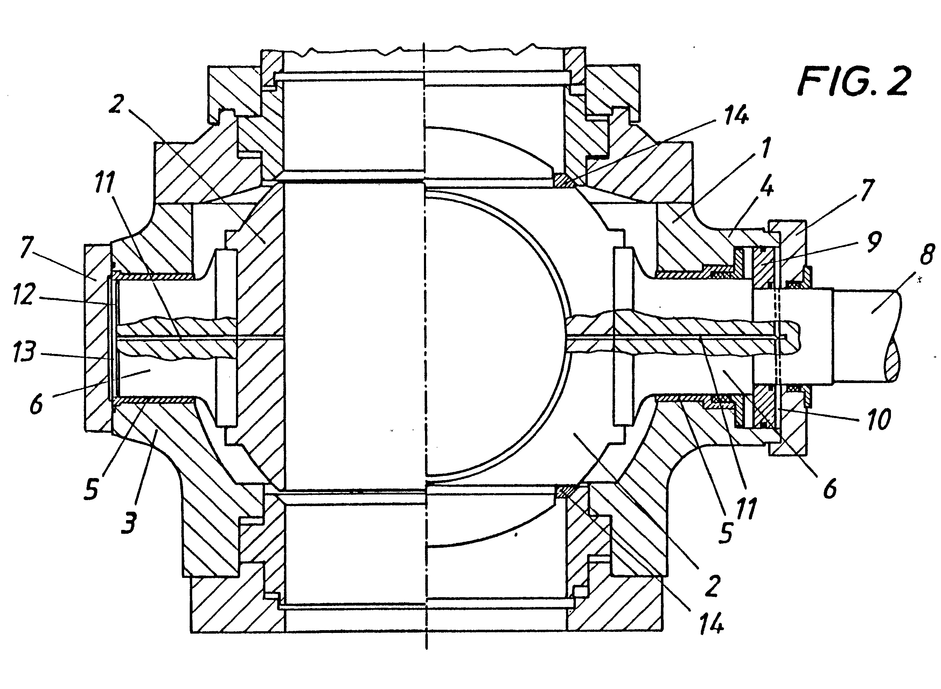

Das dargestellte Absperrorgan ist im Ausführungsbeispiel nach den Fig. 1 und 2 als Kugelschieber ausgebildet. Es wäre aber durchaus möglich, die Vorteile dieser Konstruktion auch bei anderen Drehschiebern oder bei Klappenventilen auszunützen. Es kommt ja bei allen diesen Arten von Absperrorganen darauf an, daß die Gehäusebelastung durch die Lagerung des Verschlußstückes nicht gestört wird, um ein-

erseits Überlastungen und anderseits Verformungen zu vermeiden.

Das Gehäuse 1 des dargestellten Absperrorganes weist für die Lagerung des drehbaren Verschlußstückes 2 zwei Lagerstutzen 3 und 4 auf, die Gleitlager 5 für Lagerungsansätze 6 tragen. Diese Lagerstutzen 3 und 4 sind mit Lagerdeckeln 7 verschlossen, die auf der Seite des Lagerstutzens 3 kraftschlüssig und auf der Seite des Lagerstutzens 4 formschlüssig mit dem Gehäuse 1 verbunden sind, so daß die Lagerdeckel 7 zum Abtragen von Gehäusebelastungen herangezogen werden können. Durch den einen dieser Lagerdeckel 7 ragt der zu einer Antriebswelle 8 verlängerte Lagerungsansatz 6, an dem ein Kolben 9 abgestützt ist. Dieser Kolben 9 begrenzt einen sich im Lagerstutzen 4 ergebenden, durch den Lagerdeckel 7 abgeschlossenen Druckraum 10, der über eine axiale Durchtrittsbohrung 11 durch den Lagerungsansatz 6 mit dem Gehäuseinneren in Druckverbindung steht.

In ähnlicher Weise ist zwischen der Stirnfläche 12 des anderen Lagerungsansatzes 6 und dem Lagerdeckel 7 des Lagerstutzens 3 ein Druckraum 13 vorgesehen, der ebenfalls über eine axiale Bohrung 11 mit dem Gehäuseinneren verbunden ist.

Zufolge dieser Druckverbindung wird im Bereich der Lagerdeckel 7 ein dem Gehäuseinnendruck entsprechender Druck in den Druckräumen 10 und 13 aufgebaut, der die Lagerdeckel 7 belastet, so daß die einen mittragenden Teil des Gehäuses 1 bildenden Lagerdeckel 7 für eine gleichmäßige Spannungsverteilung über den gesamten Gehäuseumfang sorgen können. Damit werden nicht nur örtliche Überlastungen des Gehäuses 1 vermieden, sondern auch Gehäuseverformungen auf Grund ungleichmäßiger Gehäusebelastungen, so daß die Dichtungen 14 des Gehäuses 1 ihrer Aufgabe auch bei hohen Drücken voll gerecht werden können.

Wegen der gleichmäßigen Gehäusebelastung wird es möglich, die Wandstärke des Gehäuses entsprechend zu reduzieren, ohne die Einsatzfähigkeit des Absperrorganes zu beeinträchtigen. Der über die Druckräume 10 und 13 auf die Lagerstutzen 6 wirksam werdende Druck wird jeweils durch einen Gegendruck ausgeglichen, so daß die Zusatzbelastung des Verschlußstückes keine Rolle spielt.

**Patentansprüche**

1. Absperrorgan, insbesondere für eine Hochdruckleitung, bestehend aus einem Gehäuse (1) und einem drehbar gelagerten Verschlußstück (2), das mit zwei die geometrische Drehachse bestimmenden Lagerungsansätzen (6) in zwei stirnseitig durch je einen Lagerdeckel (7) verschlossene Gehäuselager (5) eingreift, dadurch gekennzeichnet, daß auf beiden Seiten des Verschlußstückes (2) zwischen der Stirnfläche (12) des Lagerungsansatzes (6) bzw. einem dem Lagerungsansatz (6) zugeordneten Kolben (9) einerseits und dem Lagerdeckel (7) anderseits ein mit dem Gehäuseinneren in Druckverbindung stehender Druckraum (10, 13) vorgesehen ist.

2. Absperrorgan nach Anspruch 1, dadurch gekennzeichnet, daß zur Druckverbindung der Druckräume (10, 13) mit dem Gehäuseinneren die Lagerungsansätze (6) eine axiale Durchtrittsbohrung (11) aufweisen.

3. Absperrorgan nach Anspruch 1 oder 2, dadurch gekennzeichnet, daß das Gehäuse (1) zur Bildung der Druckräume (10, 13) mit Lagerstutzen (3, 4) versehen ist, die stirnseitig von den Lagerdeckeln (7) übergriffen sind.

**Claims**

1. A shut-off valve, particularly for a highpressure line, comprising a housing (1) and a rotatably mounted valve member (2), which has two journals (6), which define the geometric axis of rotation and extend into two housing bearings (5), which are closed at their end by respective bearing covers (7), characterized in that a pressure chamber (10, 13) is provided at each end of the valve member (2) between the end face (12) of the journal (6) or a piston (9) that is associated with the journal (6), on the one hand, and the bearing cover (7), on the other hand, and said pressure chambers are in pressure communication with the interior of the housing.

2. A shut-off valve according to claim 1, characterized in that the pressure communication between the pressure chambers (10, 13) and the interior of the housing is provided by axial through bores (11) in the journals (6).

3. A shut-off valve according to claim 1 or 2, characterized in that the pressure chambers (10, 13) are defined by bearing extensions (3, 4), which are provided on the housing (1) and are embraced at their end by the bearing covers (7).

**Revendications**

1. Organe d'arrêt, en particulier pour tuyau à haute pression, formé d'un corps (1) et d'un obturateur (2) monté de manière à pouvoir tourner, qui s'engage, par deux appendices de montage (6) déterminant l'axe géométrique de rotation, dans deux paliers de corps (5) fermés chacun du côté frontal par un couvercle de palier (7), caractérisé par le fait que sur les deux côtés de l'obturateur (2), entre la surface frontale (12) de l'appendice de montage (6), d'une part, et le couvercle de palier (7), d'autre part, est prévue une cavité de pression (10, 13) qui est en communication pour la pression avec l'intérieur du corps.

2. Organe d'arrêt selon la revendication 1, caractérisé par le fait que pour la communication pour la pression des cavités de pression (10, 13) avec l'intérieur du corps, les appendices de montage (6) présentent une perforation axiale de passage (11).

3. Organe d'arrêt selon l'une des revendications 1 et 2, caractérisé par le fait que pour former les cavités de pression (10, 13), le corps (1) est muni de tubulures de palier (3, 4) qui sont recouvertes du côté frontal par les couvercles de palier (7).

FIG.1

0 133 615

*FIG. 2*